# EUROPÄISCHE PATENTSCHRIFT

(11) **EP 1 085 030 B1**
(45) Veröffentlichungstag und Bekanntmachung des Hinweises auf die Patenterteilung: **18.05.2005**
(21) Anmeldenummer: 00116004.3
(22) Anmeldetag: 26.07.2000
(51) Int. Cl.: C08G 18/79, C08G 18/18

(54) **Katalysator und Verfahren zur Herstellung von farbreduzierten isocyanuratgruppenhaltigen Polyisocyanaten**
Catalyst and process for preparing polyisocyanates having isocyanurate groups and low colouring
Catalyseur et procédé de préparation de polyisocyanates à groupes isocyanurate et de coloration réduite

(30) Priorität: 16.09.1999 DE 19944373
(43) Veröffentlichungstag der Anmeldung: 21.03.2001
(73) Patentinhaber: Degussa AG, 40474 Düsseldorf (DE)
(72) Erfinder: Kohlstruk, Stephan, Dr., 45770 Marl (DE); Mindach, Lutz, Dr., 45770 Marl (DE); Ewald, Michael, 45768 Marl (DE)

(56) Entgegenhaltungen:
- EP-A- 0 182 203
- EP-A- 0 351 873
- EP-A- 0 611 750
- DE-A- 2 631 733
- US-A- 2 214 559
- US-A- 5 290 902

## Beschreibung

Die vorliegende Erfindung betrifft einen Katalysator und ein Verfahren zur Herstellung von farbreduzierten isocyanuratgruppenhaltigen Polyisocyanaten.

Für hochwertige Ein- und Zweikomponenten Polyurethanlacke mit hoher Licht- und Wetterbeständigkeit werden als Isocyanatkomponente insbesondere Isocyanurat- und Uretdiongruppen enthaltende Polyisocyanatmischungen eingesetzt.

Bezüglich der Herstellung von Isocyanurat- und Uretdiongruppen aufweisenden Polyisocyanaten, die als Rohstoffe für Polyurethan-Lackformulierungen in Frage kommen, sind unterschiedliche Verfahren bekannt. Diese Verfahren unterscheiden sich in der Regel durch die Auswahl der Trimersierungskatalysatoren oder auch durch die Auswahl der bei der Oligomerisierungsreaktion einzusetzenden organischen Isocyanate (vgl. z.B. GB 1 391 066, EP-A-0 082 987, DE-OS 39 02 078, EP-A-0 339 396, EP-A-0 224 165).

Zur Trimerisierung geeignete Isocyanate, z. B. aromatische, cycloaliphatische und aliphatische di- und höherwertige Polyisocyanate, können nach verschiedenartigen Verfahren hergestellt werden (Annalen der Chemie 562 (1949), Seiten 75ff.). Technisch insbesondere bewährt hat sich die Herstellung durch Phosgenierung von organischen Polyaminen zu den entsprechenden Polycarbaminsäurechloriden und deren thermische Spaltung in organische Polyisocyanate und Chlorwasserstoff. Alternativ können organische Polyisocyanate auch ohne die Verwendung von Phosgen, d. h. nach phosgenfreien Verfahren, hergestellt werden. Nach Angaben der EP-A-0 126 299 (USP 4 596 678), EP-A-126 300 (USP 4 596 679) und EP-A-355 443 (USP 5 087 739) beispielsweise können (cyclo)aliphatische Diisocyanate - wie 1,6-Hexamethylendiisocyanat (HDI) und/oder isomere aliphatische Diisocyanate mit 6 Kohlenstoffatomen im Alkylenrest und 1-Isocyanato-3-isocyanato-methyl-3,5,5-trimethyl-cyclohexan (Isophorondiisocyanat bzw. IPDI) - hergestellt werden durch Umsetzung der (cyclo)aliphatischen Diamine mit Harnstoff und Alkoholen zu (cyclo)aliphatischen Biscarbaminsäureestern und deren thermische Spaltung in die entsprechenden Diisocyanate und Alkohole. Die Synthese erfolgt kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten.

Als Katalysatoren für die Trimerisierung von Isocyanaten zu den angestrebten Isocyanurat- und Uretdiongruppen aufweisenden Polyisocyanaten können beispielsweise tertiäre Amine, Phosphine, Alkaliphenolate, Aminosilane, quartäre Ammoniumhydroxide oder quartäre Ammoniumcarbonate eingesetzt werden. Gut geeignete Oligomerisierungskatalysatoren sind auch Hydroxide, Halogenide oder Carboxylate von Hydroxyalkylammonium-Ionen (vgl. z.B. EP-A-0 351 873, USP 5 290 902), Alkalimetallsalze sowie Zinn-, Zink- bzw. Bleisalze von Alkylcarbonsäuren. In Abhängigkeit vom Katalysator ist auch die Verwendung von diversen Co-Katalysatoren wie z.B. OH-funktionalisierten Verbindungen oder Mannichbasen aus sekundären Aminen und Aldehyden bzw. Ketonen möglich.

Zur Oligomerisierung läßt man die (cyclo)aliphatischen Diisocyanate in Gegenwart des Katalysators, gegebenenfalls unter Verwendung von Lösungsmitteln und/oder Hilfsstoffen, bis zum Erreichen des gewünschten Umsatzes reagieren. Man spricht in diesem Zusammenhang auch von partieller Trimerisierung, da der angestrebte Umsatz in der Regel deutlich unterhalb von 100 % liegt. Danach wird die Reaktion durch Desaktivierung des Katalysators abgebrochen und das überschüssige monomere Diisocyanat üblicherweise abgetrennt, in der Regel duch Kurzweg- oder Dünnschichtdestillation. Die Desaktivierung erfolgt thermisch oder durch Zusatz eines Katalysatorinhibitors wie beispielsweise p-Toluolsulfonsäure oder Bis(2-Ethylhexyl)phosphat. Besonders vorteilhaft im Hinblick auf die Trimerisierung von Isocyanaten im technischen Maßstab ist der Einsatz von quartärneren Hydroxyalkylammoniumcarboxylaten als Oligomerisierungskatalysatoren. Diese Katalysatoren vom Cholin-Typ sind thermisch labil. Es ist unnötig, die Trimerisierung bei Erreichen des gewünschten Umsatzes durch Zusatz potentiell qualitätsmindernder Katalysatorinhibitoren abzustoppen. Statt dessen erlaubt die gezielte thermische Desaktivierung eine optimale Prozeßkontrolle. Vorteilhaft ist die Thermolabilität auch unter dem Gesichtspunkt der Prozeßsicherheit. Ein unkontrolliertes "Durchgehen" der Reaktion ist ausgeschlossen, sofern die zudosierte Katalysatormenge das übliche Maß nicht um ein Vielfaches übersteigt.

Je nach dem verwendeten Katalysatortyp und der Reaktionstemperatur erhält man Polyisocyanate mit unterschiedlichen Anteilen an Isocyanurat- bzw. Uretdiongruppen. Die Produkte sind meist klare, aber in Abhängigkeit vom Katalysatortyp, der Diisocyanatqualität, der Reaktionstemperatur und der Reaktionsfahrweise mehr oder weniger stark gelbgefärbte Produkte. Für die Herstellung hochwertiger Polyurethanlacke sind jedoch Produkte mit einer möglichst niedrigen Farbzahl erwünscht.

Die unerwünschte Gelbfärbung tritt auch bei Einsatz der ansonsten sehr vorteilhaften quarternären Hydroxyalkylammoniumcarboxylaten (*vide supra*) auf, so daß in dieser Hinsicht konkreter Optimierungsbedarf besteht. Überraschenderweise wurde nun gefunden, daß spezielle quartärnere Hydroxyalkylammoniumcarboxylate im Vergleich zu anderen Katalysatoren dieses Typs Isocyanuratgruppen enthaltende Polyisocyanate mit deutlich verbesserter Farbgüte liefern.

Gegenstand der Erfindung ist ein Verfahren zur Herstellung von farbreduzierten isocyanuratgruppenhaltigen Polyisocyanaten durch partielle Trimerisierung von aliphatischen, cycloaliphatischen und/oder (cyclo)aliphatischen Diisocyanaten und anschließender Abtrennung von überschüssigem Diisocyanat, dadurch gekennzeichnet, daß die Trimerisierung in Gegenwart von 0,04 - 2 Gew.-%, basierend auf dem Gewicht des eingesetzten Diisocyanates, mindestens eines Trimerisierungskatalysators der allgemeinen Formel (**I**) erfolgt 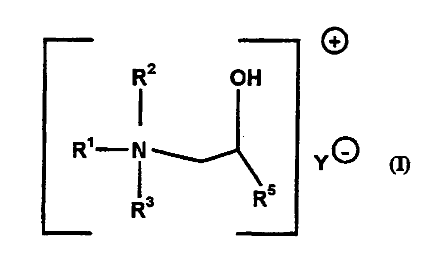 mit R¹ = 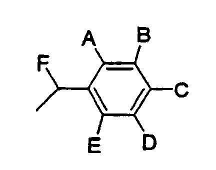 und wobei die Variablen folgende Bedeutung haben:
A,B,C,D,E: unabhängig voneinander oder gleichzeitig Wasserstoff, Chlor, C1-C4-Alkyl, C1-C4-Alkoxy, C1-C4-Alkoxycarbonyl, Hydroxy, (R⁵)₃SiO-, (R⁵)₂N-, -COOH, (R⁵)₂N-CH₂- oder Phenyl, wobei zwei beliebige benachbarte Reste aus der Gruppe A,B,C,D,E einen gemeinsamen 5- oder 6-gliedrigen, gesättigten oder ungesättigten Ring bilden können, der auch N,S oder O als Heteroatom enthalten kann;
- F :: Wasserstoff oder Methyl;
- R², R³:: unabhängig voneinander oder gleichzeitig C1-C4-Alkyl, C2-C6-Hydroxyalkyl (mit der Hydroxygruppe in 2-Position zum quarternären Stickstoff) oder R¹;
- R⁴:: Wasserstoff, Methyl, C2-C10-Alkyl, C3-C8-Cycloalkyl oder C2-C12-Alkoxy;
- R⁵:: C1-C4-Alkyl;
- Y⁻:: R⁶COO⁻ oder OH⁻;
- R⁶:: Wasserstoff oder verzweigter oder unverzweigter aliphatischer oder araliphatischer C1-C10-Alkylrest.

Ein weiterer Gegenstand der Erfindung ist ein Trimerisierungskatalysator zur Herstellung von farbreduzierten isocyanuratgruppenhaltigen Polyisocyanaten der allgemeinen Formel (**I**) 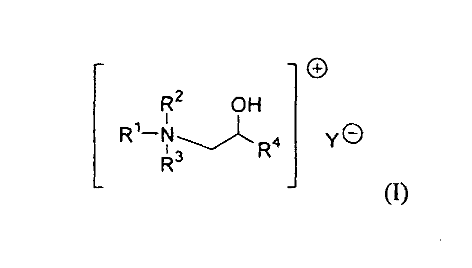 mit 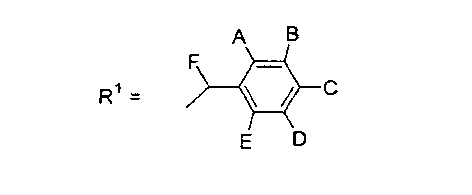 und wobei die Variablen folgende Bedeutung haben:
A,B,C,D,E: unabhängig voneinander oder gleichzeitig Wasserstoff, Chlor, C1-C4-Alkyl, C1-C4-Alkoxy, C1-C4-Alkoxycarbonyl, Hydroxy, (R⁵)₃SiO-, (R⁵)₂N-, -COOH, (R⁵)₂N-CH₂- oder Phenyl, wobei zwei beliebige benachbarte Reste aus der Gruppe A,B,C,D,E einen gemeinsamen 5- oder 6-gliedrigen, gesättigten oder ungesättigten Ring bilden können, der auch N,S oder O als Heteroatom enthalten kann;
- F :: Wasserstoff oder Methyl;
- R²:: C1-C4-Alkyl, C2-C6-Hydroxyalkyl (mit der Hydroxygruppe in 2-Position zum quarternären Stickstoff)oder R¹;
- R³:: C2-C4-Alkyl, oder R¹;
- R⁴:: Wasserstoff, Methyl, C2-C10-Alkyl, C3-C8-Cycloalkyl oder C2-C12-Alkoxy;
- R⁵:: C1-C4-Alkyl;
- Y⁻:: R⁶COO⁻ oder OH⁻;
- R⁶:: Wasserstoff oder verzweigte oder unverzweigter aliphatischer oder araliphatischer C1-C10-Alkylrest.

Die erfindungsgemäßen Trimerisierungskatalysatoren lassen sich zur Umsetzung von Diisocyanaten einsetzen, die nach dem Phosgenverfahren oder einem phosgenfreien Prozeß, zum Beispiel durch thermische Spaltung von (cyclo)aliphatischen Biscarbaminsäureestern (vgl. z.B. EP-A-0 126 299 (USP 4 596 678)), hergestellt worden sind. Geeignete Ausgangsdiisocyanate für das erfindungsgemäße Verfahren sind aliphatische, cycloaliphatische und/oder (cyclo)aliphatische Diisocyanate, z.B. 1,4-Diisocyanatocyclohexan, 1,6-Diisocyanatohexan (HDI), 1,12-Diisocyanatododecan, 1-Isocyanato-3,3,5-trimethylcyclohexan (IPDI), 4,4'-Diisocyanatodicyclohexylmethan, 1,5-Diisocyanato-2,2-dimethylpentan, 1,5-Diisocyanato-2-ethyl-2-propylpentan, 1,5-Diisocyanato-2-butyl-2-ethylpentan, 1,6-Diisocyanato-2,4,4-trimethylhexan und 1,6-Diisocyanato-2,4,4-trimethylhexan (TMDI), 1,5-Diisocyanato-2-methylpentan (MPDI) sowie 2,5(2,6)-Bis(isocyanatomethyl)bicyclo[2.2.1]heptan (NBDI). Bevorzugt werden HDI, IPDI, MPDI, TMDI und NBDI eingesetzt.

Die Herstellung der Isocyanuratgruppen enthaltenden Polyisocyanate durch partielle Trimerisierung kann kontinuierlich (Rohrreaktor oder Kesselkaskade) erfolgen oder auch batchweise durchgeführt werden. Die erfindungsgemäßen Katalysatoren werden in geringer Konzentration zwischen 0,04 und 2,0 Gew.-%, eingesetzt. Die exakte Menge ist abhängig vom individuellen Katalysator, vom Umsatzziel und von der Verfahrensweise, wobei der Einsatz von Rührkesseln erfahrungsgemäß die Zudosierung einer größeren Katalysatormenge erforderlich macht.

Die Trimerisierung läßt sich unter diesen Bedingungen innerhalb von 1-60 Minuten durchführen. Es werden Verbindungen erhalten, die einen oder auch mehrere Isocyanuratringe haben. Als Nebenkomponente können in geringer Menge ggf. auch Verbindungen mit Uretdionstruktur gefunden werden. Verbindungen dieser Art sind in der Literatur beschrieben.

Die erfindungsgemäßen Trimerisierungskatalysatoren können durch Umsetzung von tertiären Aminen mit einer Carbonsäure und einem Oxiran hergestellt werden. Das Molverhältnis in bezug auf die Funktionalitäten der Reaktionspartnern sollte in etwa 1:1:1 betragen, wobei ein Überschuß von 20 Mol-% erfahrungsgemäß ohne signifikant nachteiligen Effekt auf die Katalysatorperformance bleibt, unabhängig von der Wahl der Überschußkomponenten. Die Reaktionstemperatur liegt zwischen 10 °C und 80 °C, vorzugsweise zwischen 20 °C und 50 °C. Die Umsetzung kann in Gegenwart oder Abwesenheit von Lösemitteln durchgeführt werden. Geeignete Lösemittel sind z.B. Ethylenglykol, Tetrahydrofuran, 1-Butanol, Methanol oder Benzylalkohol. Beispiele für grundsätzlich geeignete tertiäre Amine sind N,N-Dimethyl-2-methoxybenzylamin, N,N-Dimethyl-3-methoxybenzylamin, N,N-Dimethyl-4-methoxybenzylamin, N,N-Dimethyl-2,3-dimethoxybenzylamin, N,N-Dimethyl-3,4-dimethoxybenzylamin, N,N-Dimethyl-3,5-dimethoxybenzylamin, N,N-Dimethylbenzylamin, N,N-Dimethylbenzylamin-4-carbonsäure, 4-Methoxycarbonyl-N,N-Dimethylbenzylamin, 4-Ethoxycarbonyl-N,N-dimethylbenzylamin, 3-(N,N-Dimethylaminomethyl)-N,N-dimethylbenzylamin, 2-Phenylethyldimethylamin, 1-Phenylethyldimethylamin, 4-Hydroxy-N,N-dimethylbenzylamin, 4-Trimethylsiloxy-N,N-dimethylbenzylamin und N,N-Dimethylnaphtylamin. Als geeignete Carbonsäuren kommen beispielsweise Pivalinsäure, Hexansäure, Essigsäure, 2-Ethylhexansäure, Propansäure, Adipinsäure, Bernsteinsäure und Ölsäure in Frage. Geeignete Oxirane sind aliphatische oder araliphatische Verbindungen, die 1,2-Epoxidgruppen aufweisen, also beispielsweise Ethylenoxid, Propylenoxid, 1,2-Butylenoxid , 1,2-Dodecenoxid und 2,2-Dimethyloxiran. Geeignete Oxirane können auch funktionalisierte Epoxyverbindungen sein wie beispielsweise 2,3-Epoxypropyl-isopropylether.

Zur Herstellung isocyanuratgruppenhaltiger Polyisocyanate, werden die erfindungsgemäßen Katalysatoren bevorzugt in kleinen Mengen eingesetzt. Die exakte Menge läßt sich leicht experimentell ermitteln und ist abhängig von der katalytischen Aktivität des individuellen Kontaktes, dem Umsatzziel und der Verfahrensweise.

Erfindungsgemäß werden die Hydroxyalkylammoniumcarboxylate der Formel **I** im allgemeinen in einer Menge von 0,04 - 2 Gew.-%, bevorzugt 0,06 - 1,5 Gew.-% , basierend auf dem Gewicht des eingesetzten (cyclo)aliphatischen Diisocyanates, eingesetzt.

Das erfindungsgemäße Verfahren wird bei Temperaturen zwischen 35 °C und 185 °C durchgeführt. Unter 35 °C ist die zur Trimerisierung notwendige Katalysatormenge erfahrungsgemäß so groß, das Farbprobleme resultieren können. Bei Temperaturen oberhalb von 185 °C kann es ebenfalls zur unerwünschten Verfärbung der isocyanuratgruppenhaltigen Polyisocyanate kommen. Bevorzugt erfolgt die Trimerisierung in Gegenwart der erfindungsgemäßen Katalysatoren bei Temperaturen zwischen 50 °C und 175 °C.

Erfindungsgemäß wird die Trimerisierung der Diisocyanate entweder batchweise oder kontinuierlich durchgeführt.

Beim Batchverfahren wird in einem Rührreaktor gearbeitet. Dabei wird die Mischung aus Diisocyanat und Katalysator üblicherweise bei Raumtemperatur vorgelegt. Im Anschluß wird die Temperatur der Reaktionsmischung zur Initiierung der Trimerisierung auf 35 bis 140 °C, bevorzugt auf 50 bis 110 °C, erhöht. Alternativ kann der Katalysator auch zudosiert werden, nachdem das Diisocyanat die zur Reaktion notwendige Temperatur erreicht hat. Die Trimerisierung ist exotherm, der Katalysator wird im Verlauf der Reaktion zerstört.

Die kontinuierliche Trimerisierung wird zweckmäßigerweise in einer Reaktionsschlange unter kontinuierlicher, gleichzeitiger Zudosierung des Diisocyanats und des Trimerisierungskatalysators bei 40 bis 120 °C und innerhalb von 1 bis 7 Minuten durchgeführt. Eine Reaktionschlange mit kleinem Durchmesser führt zur Erreichung hoher Stömungsgeschwindigkeiten. Weiterhin ist es sehr vorteilhaft, das Diisocyanat/Katalysatorgemisch vor Eintritt in die Reaktionsschlange auf ca. 50 bis 60 °C zu erhitzen. Weiterhin entscheidend ist die Zudosierung des Katalysators. Es hat sich als besonders zweckmäßig erwiesen, die Einsatzprodukte vor Eintritt in die Reaktionsschlange intensiv zu mischen. Zur exakteren Dosierung der geringen Katalysatormengen und zur Erzeugung einer besseren Durchmischungsqualität kann es vorteilhaft sein, den Katalysator in einem geeigneten organischen Lösungsmittel zu lösen. Geeignet sind prinzipiell solche Lösungsmittel, in denen der Katalysator eine gute Löslichkeit hat. Vorzugsweise wird jedoch weitgehend auf den Einsatz von Lösungsmitteln verzichtet.

Die Temperatur der Reaktionsschlangenabschnitte wählt man zweckmäßigerweise so, daß die Vorwärmzone ca. 40 bis 60 °C, die Reaktionszone 70 bis 120 °C, vorzugsweise 70 bis 100 °C, und die Abkühlzone 20 bis 40 °C hat. Die optimalen Temperaturbedingungen sind jeweils den erforderlichen Bedingungen für das zu trimerisierende Diisocyanat anzupassen.

Zur Entfernung des nicht umgesetzten Diisocyanats wird das Reaktionsgemisch einer Kurzwegverdampfung unterzogen.

Als zur Trimerisierung geeignete Ausgangsverbindungen kommen Diisocyanate mit aliphatischen, cycloaliphatischen oder aliphatische und cycloaliphatischen Isocyanatgruppen in Frage, die nach dem Phosgenverfahren oder einem phosgenfreien Prozeß hergestellt worden sind, oder auch Mischungen solcher Diisocyanate. Geeignete aliphatische Diisocyanate weisen bevorzugt 3 bis 16, besonders bevorzugt 4 bis 12 Kohlenstoffatome, in ihrer linearen oder verzweigten Alkylen-Substruktur auf. Geeignete chlorarme cycloaliphatische Diisocyanate haben bevorzugt 4 bis 18, besonders bevorzugt 6 bis 15 Kohlenstoffatome, in ihrer Cycloalkylen-Substruktur. Beispielhaft seien explizit 1-Isocyanato-3,3,5-trimethyl-5-isocyanatomethylcyclohexan (IPDI), 1,6-Hexamethylendiisocyanat (HDI), 2-Methyl-1,5-pentamethylendiisocyanat (MPDI), 2,5(2,6)-Bis(isocyanatomethyl)bicyclo[2.2.1]heptan (NBDI) sowie 2,2,4- oder 2,4,4-Trimethyl-1,6-hexamethylendiisocyanat (TMDI) aufgeführt.

Die erfindungsgemäß hergestellten monomerbefreiten isocyanuratgruppenhaltigen Isocyanurate stellen nützliche Zwischenprodukte für Polyurethanbeschichtungen, z.B. Leder- und Textilbeschichtungen, und für Polyurethandispersionen und Klebstoffe dar, und sind besonders wertvoll als Polyisocyanat-Komponente in 1- und 2-Komponenten Polyurethansystemen für wetter- und lichtbeständige Polyurethanlacke. Dabei können die erfindungsgemäßen Verfahrenprodukte sowohl als solche als auch in mit Blockierungsmitteln blockierter Form zum Einsatz gelangen. Geeignete Blockierungsmittel sind dabei beispielsweise Lactame wie ε-Caprolactam, Oxime wie Methylethylketoxim oder Butanonoxim, Triazole wie 1H-1,2,4-Triazol, leicht enolisierbare Verbindungen wie Acetessigester oder Acetylaceton oder auch Malonsäurederivate wie Malonsäurediester mit 1-10 C-Atomen in den Alkoholresten.

### Beispiele

### A. Herstellung der Katalysatoren (nicht erfindungsgemäß)

Alle Umsetzungen erfolgen unter einer Inertgas-Atmosphäre, vorzugsweise unter Stickstoff.

### A.1. Herstellung von N-(2-Hydroxypropyl)-N,N-dimethyl-N-(3-methoxybenzyl)ammonium-2-ethylhexanoat (Kat.1)

In einem Dreihalskolben mit Claisen-Aufsatz, Rückflußkühler, Innenthermometer, mechanischem Rühraufsatz, Tropftrichter sowie Gasein- und -auslaß wird 3-Methoxybenzyldimethylamin (1 mol) bei Raumtemperatur unter Rühren mit Propylenoxid (1 mol; auf ca. 0°C temperiert) versetzt. Im Anschluß wird 2-Ethylhexansäure (1 mol) so zudosiert, daß die Temperatur der Reaktionslösung 35 °C nicht überschreitet. Nach Beendigung der Zugabe läßt man bei Raumtemperatur weiterrühren. Der Katalysator erreicht nach ca. 2 bis 3 Tagen seine volle Aktivität.

### A.2. Herstellung von N-(2-Hydroxybutyl)-N,N-dimethyl-N-(3-methoxybenzyl)ammonium-2- ethylhexanoat (Kat.2)

In einem Dreihalskolben mit Claisen-Aufsatz, Rückflußkühler, Innenthermometer, mechanischem Rühraufsatz, Tropftrichter sowie Gasein- und -auslaß wird 3-Methoxybenzyldimethylamin (1 mol) bei 40 °C unter Rühren mit 1,2-Butenoxid (1 mol) versetzt. Im Anschluß wird 2-Ethylhexansäure (1 mol) so zudosiert, daß die Temperatur der Reaktionslösung 50 °C nicht überschreitet. Nach Beendigung der Zugabe läßt man bei Raumtemperatur weiterrühren. Der Katalysator erreicht nach ca. 2 Tagen seine volle Aktivität.

### A.3. Herstellung von N-(2-Hydroxybutyl)-N,N-dimethyl-N-(3-methoxybenzyl)ammonium-pivalat (Kat.3)

Die Herstellung erfolgt analog zu Kat.2 (A.2.). Anstelle von 2-Ethylhexansäure wird Pivalinsäure eingesetzt. Der Katalysator erreicht nach ca. 2 Tagen seine volle Aktivität.

### A.4. Herstellung von N-(2-Hydroxypropyl)-N,N-dimethyl-N-(3,4-dimethoxybenzyl)ammonium-2- ethylhexanoat (Kat.4)

Die Herstellung erfolgt analog zu Kat.1 (A.1.). Anstelle von 3-Methoxybenzyldimethylamin kommt 3,4-Dimethoxybenzyldimethylamin zum Einsatz. Der Katalysator erreicht nach ca. 2 bis 3 Tagen seine volle Aktivität.

### A.5. Herstellung von N-(2-Hydroxypropyl)-N,N-dimethyl-N-(3,4-dimethoxybenzyl)ammonium-formiat (Kat.5)

In einem Dreihalskolben mit Claisen-Aufsatz, Rückflußkühler, Innenthermometer, mechanischem Rühraufsatz, Tropftrichter sowie Gasein- und -auslaß wird 3,4-Dimethoxybenzyldimethylamin (1 mol) bei Raumtemperatur unter Rühren mit Propylenoxid (1 mol; auf ca. 0 °C temperiert) versetzt. Im Anschluß wird Ameisensäure (1 mol) so zudosiert, daß die Temperatur der Reaktionslösung 35 °C nicht überschreitet. Nach Beendigung der Zugabe läßt man bei Raumtemperatur weiterrühren. Der Katalysator erreicht nach ca. 2 bis 3 Tagen seine volle Aktivität.

### A.6. Herstellung von N-(2-Hydroxybutyl)-N,N-dimethyl-N-(3,4-dimethoxybenzyl)ammonium-2- ethylhexanoat (Kat.6)

In einem Dreihalskolben mit Claisen-Aufsatz, Rückflußkühler, Innenthermometer, mechanischem Rühraufsatz, Tropftrichter sowie Gasein- und -auslaß wird 3,4-Dimethoxybenzyldimethylamin (1 mol) bei 40 °C unter Rühren mit 1,2-Butenoxid (1 mol) versetzt. Im Anschluß wird 2-Ethylhexansäure (1 mol) so zudosiert, daß die Temperatur der Reaktionslösung 50 °C nicht überschreitet. Nach Beendigung der Zugabe läßt man bei Raumtemperatur weiterrühren. Der Katalysator erreicht nach ca. 2 Tagen seine volle Aktivität.

### A.7. Herstellung von N-(2-Hydroxyhexyl)-N,N-dimethyl-N-(3,4-dimethoxybenzyl)ammonium-2- ethylhexanoat (Kat.7)

Die Herstellung erfolgt analog zu Kat.6 (A.6.). Anstelle von 1,2-Butenoxid wird 1,2-Hexenoxid eingesetzt. Der Katalysator erreicht seine volle Aktivität nach ca. 2 Tagen.

### A.8. Herstellung von N-(2-Hydroxyhexyl)-N,N-dimethyl-N-(3,4-dimethoxybenzyl)ammonium-hexanoat (Kat.8)

In einem Dreihalskolben mit Claisen-Aufsatz, Rückflußkühler, Innenthermometer, mechanischem Rühraufsatz, Tropftrichter sowie Gasein- und -auslaß wird 3-Methoxybenzyldimethylamin (1 mol) bei 40 °C unter Rühren mit 1,2-Hexenoxid (1 mol) versetzt. Im Anschluß wird Hexansäure (1 mol) so zudosiert, daß die Temperatur der Reaktionslösung 50 °C nicht überschreitet. Nach Beendigung der Zugabe läßt man bei Raumtemperatur weiterrühren. Der Katalysator erreicht nach ca. 2 Tagen seine volle Aktivität.

### A.9. Herstellung von N-(2-Hydroxybutyl)-N,N-dimethyl-N-(3-methylbenzyl)ammonium-2-ethylhexanoat (Kat.9)

Die Herstellung erfolgt analog zu Kat.2 (A.2.). Anstelle von 3-Methoxybenzyldimethylamin wird 3-Methylbenzyldimethylamin eingesetzt. Der Katalysator erreicht seine volle Aktivität nach ca. 2 Tagen.

### A.10. Herstellung von N-(2-Hydroxybutyl)-N,N-dimethyl-N-(2-methoxybenzyl)ammonium-2-ethylhexanoat (Kat. 10)

Die Herstellung erfolgt analog zu Kat.2 (A.2.). Anstelle von 3-Methoxybenzyldimethylamin wird 2-Methoxybenzyldimethylamin eingesetzt. Der Katalysator erreicht seine volle Aktivität nach ca. 2 Tagen.

Ergänzende Anmerkung: Eine extraktive Reinigung der Katalysatoren mit Hexan (5x100 ml) ist möglich, bleibt aber in aller Regel ohne signifikant positiven Einfluß auf die Farbqualität der monomerbefreiten Polyisocyanate.

### B. Trimerisierungsexperimente: Beispiele 1-20 und Vergleichsbeispiele 1-5

### B.1. Trimerisierung der Isocyanate

Katalysator und (cyclo)aliphatisches Diisocyanat werden bei Raumtemperatur vorgelegt. Die Temperatur der unter Inertgas-Atmosphäre (N₂) gehaltenen, mechanisch gerührten Reaktionsmischung wird innerhalb von 10 bis 12 min kontinuierlich auf die Starttemperatur (ca. 70 °C) erhöht. Nach Initiierung der exothermen Trimerisierungsreaktion wird die Heizquelle entfernt. Die Temperatur der Reaktionsmischung durchläuft ein Maximum und fällt nach der im Verlauf der Umsetzung erfolgenden thermischen Deaktivierung des Katalysators wieder ab. Man läßt auf Raumtemperatur abkühlen und trennt das überschüssige Monomer vom Polyisocyanat durch Kurzwegverdampfung ab.

Als Vergleichskatalysatoren . wurden N-(2-Hydroxypropyl)-N,N,N-trimethylammonium-2-ethylhexanoat (V-Kat.1), N-(2-Hydroxypropyl)-N,N,N-trimethylammonium-formiat (V-Kat.2) und N-(2-Hydroxypropyl)-N,N,N-trimethylammonium-hydroxid (V-Kat.3) eingesetzt.

Die Ergebnisse der Trimerisierungsversuche sind in Tabelle 1. zusammengefaßt und untermauern das Leistungsvermögen der erfindungsgemäßen Katalysatoren im Vergleich zu gängigen Trimerisierungskatalysatoren vom Cholin-Typ. Die Farbzahlen lassen sich noch verbessern, wenn die Trimerisierung kontinuierlich durchgeführt wird. Dabei bleibt die in Tabelle 1. dokumentierte Überlegenheit der erfindungsgemäßen Katalysatoren erhalten. Grundsätzlich liefern chlorarme (Chlorgehalt < 100 mg/kg) und chlorfreie - beispielsweise nach dem Harnstoffverfahren (vgl. z.B. EP-A-0 355 443) hergestellte - (cyclo)aliphatische Diisocyanate die besten Ergebnisse. Alkohole wie Benzylalkohol oder Butanol können ohne qualitätsmindernde Wirkung als Co-Katalysatoren oder zur Verdünnung der erfindungsgemäßen Katalysatoren eingesetzt werden.

**Tabelle 1.**

| Eintrag | Diisocyanat | Katalysator | | Isocyanuratgruppen enthaltende Polyisocyanate | | Monomerbefreite Isocyanurate |
|---|---|---|---|---|---|---|
| | | Typ | Menge [Gew.-%] | NCO-Gehalt [Gew.-%] | Farbzahl [Hazen] | Farbzahl [Hazen] |
| Vergleichsbeispiel | | | | | | |
| 1 | IPDI | V-Kat.1 | 0.20 | 30.2 | 105 | 131¹⁾ |
| 2 | HDI | V-Kat.1 | 0.10 | 35.4 | 97 | 176 |
| 3 | MPDI | V-Kat.1 | 0.10 | 36.4 | 108 | 201 |
| 4 | IPDI | V-Kat.2 | 0.20 | 29.9 | 178 | 212¹⁾ |
| 5 | IPDI | V-Kat.3 | 0.20 | 29.4 | 98 | 131¹⁾ |

| Beispiel | | | | | | |
|---|---|---|---|---|---|---|
| 1 | IPDI | Kat.1 | 0.25 | 30.4 | 43 | 61¹⁾ |
| 2 | HDI | Kat.1 | 0.10 | 38.8 | 23 | 49 |
| 3 | IPDI | Kat.2 | 0.25 | 30.5 | 42 | 62¹⁾ |
| 4 | HDI | Kat.2 | 0.10 | 38.8 | 26 | 49 |
| 5 | MPDI | Kat.2 | 0.10 | 39.8 | 29 | 56 |
| 6 | IPDI | Kat.3 | 0.25 | 30.5 | 47 | 71¹⁾ |
| 7 | HDI | Kat.3 | 0.10 | 38.9 | 30 | 54 |
| 8 | IPDI | Kat.4 | 0.19 | 30.9 | 37 | 52¹⁾ |
| 9 | HDI | Kat.4 | 0.10 | 38.7 | 27 | 52 |
| 10 | IPDI | Kat.5 | 0.19 | 31.0 | 61 | 98¹⁾ |
| 11 | HDI | Kat.5 | 0.10 | 39.1 | 38 | 91 |
| 12 | IPDI | Kat.6 | 0.19 | 30.9 | 36 | 50¹⁾ |
| 13 | HDI | Kat.6 | 0.10 | 38.8 | 28 | 50 |
| 14 | IPDI | Kat.7 | 0.19 | 30.8 | 32 | 45¹⁾ |
| 15 | HDI | Kat.7 | 0.10 | 38.7 | 22 | 43 |
| 16 | MPDI | Kat.7 | 0.10 | 39.9 | 19 | 41 |
| 17 | IPDI | Kat.8 | 0.19 | 30.7 | 33 | 47¹⁾ |
| 18 | HDI | Kat.8 | 0.10 | 38.9 | 21 | 40 |
| 19 | IPDI | Kat.9 | 0.35 | 30.4 | 42 | 60¹⁾ |
| 20 | HDI | Kat.9 | 0.10 | 38.9 | 25 | 49 |
| 21 | IPDI | Kat.10 | 0.25 | 30.4 | 40 | 57¹⁾ |
| 22 | HDI | Kat.10 | 0.10 | 38.8 | 28 | 52 |
| 23 | IPDI | Kat.2²⁾ | 0.25 | 30.4 | 44 | 63¹⁾ |
| 24 | IPDI³⁾ | Kat.2 | 0.25 | 30.6 | 27 | 35¹⁾ |
| 25 | IPDI | Kat.7²⁾ | 0.19 | 30.7 | 32 | 46¹⁾ |
| 26 | IPDI⁴⁾ | Kat.7 | 0.19 | 30.8 | 28 | 39¹⁾ |

| | | | | | | |
|---|---|---|---|---|---|---|
| ¹⁾ 50 %ige Lösung in Butylacetat; | | | | | | |
| ²⁾ Kat.2 als 90 %ige Lösung in Benzylalkohol; | | | | | | |
| ³⁾ IPDI mit Chlorgehalt < 100 ppm; | | | | | | |
| ⁴⁾ Chlorfreies IPDI (über Harnstoff-Verfahren hergestellt) | | | | | | |

## Patentansprüche

1. Verfahren zur Herstellung von farbreduzierten isocyanuratgruppenhaltigen Polyisocyanaten durch partielle Trimerisierung von aliphatischen, cycloaliphatischen und/oder (cyclo)aliphatischen Diisocyanaten und anschließender Abtrennung von überschüssigem Diisocyanat, **dadurch gekennzeichnet, daß** die Trimerisierung in Gegenwart von 0,04 - 2 Gew.-%, basierend auf dem Gewicht des eingesetzten Diisocyanates, mindestens eines Trimerisierungskatalysators der allgemeinen Formel (**I**) erfolgt 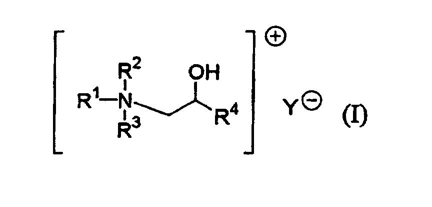 mit 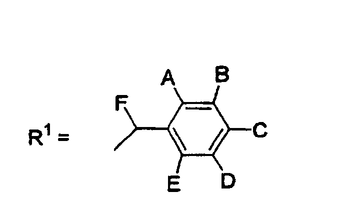 und wobei die Variablen folgende Bedeutung haben:
A,B,C,D,E: unabhängig voneinander oder gleichzeitig Wasserstoff, Chlor, C1-C4-Alkyl, C1-C4-Alkoxy, C1-C4-Alkoxycarbonyl, Hydroxy, (R⁵)₃SiO-, (R⁵)₂N-, -COOH, (R⁵)₂N-CH₂- oder Phenyl, wobei zwei beliebige benachbarte Reste aus der Gruppe A,B,C,D,E einen gemeinsamen 5- oder 6-gliedrigen, gesättigten oder ungesättigten Ring bilden können, der auch N,S oder O als Heteroatom enthalten kann;
F : Wasserstoff oder Methyl;
R², R³: unabhängig voneinander oder gleichzeitig C1-C4-Alkyl, C2-C6-Hydroxyalkyl (mit der Hydroxygruppe in 2-Position zum quarternären Stickstoff) oder R¹;
R⁴: Wasserstoff, Methyl, C2-C10-Alkyl, C3-C8-Cycloalkyl oder C2-C12-Alkoxy;
R⁵: C1-C4-Alkyl;
Y⁻: R⁶COO⁻ oder OH⁻;
R⁶: Wasserstoff oder verzweigter oder unverzweigter aliphatischer oder araliphatischer C1-C10-Alkylrest.

2. Verfahren gemäß Anspruch 1,
**dadurch gekennzeichnet,**
**daß** die Trimerisierung bei Temperaturen zwischen 35 °C und 185 °C durchgeführt wird.

3. Vefahren gemäß Anspruch 1 oder 2,
**dadurch gekennzeichnet,**
**daß** als Diisocyanate 1-Isocyanato-3,3,5-trimethyl-5-isocyanatomethylcyclohexan (IPDI), 1,6-Hexamethylendiisocyanat (HDI), 2-Methyl-1,5-diisocyanat (MPDI), 2,5(2,6)-Bis(isocyanatomethyl)bicyclo[2.2.1]heptan (NBDI) sowie 2,2,4- oder 2,4,4-Trimethyl-1,6-hexamethylendiisocyanat (TMDI) allein oder in Mischungen eingesetzt werden.

4. Verfahren nach Anspruch 1 bis 3,
**dadurch gekennzeichnet,**
**daß** 0,06 - 1,5 Gew.-% Katalysator eingesetzt wird.

5. Verfahren nach Anspruch 1 bis 4,
**dadurch gekennzeichnet,**
**daß** Diisocyanate eingesetzt werden, die nach dem Phosgenverfahren und/oder einem phosgenfreien Prozeß hergestellt wurden.

6. Trimerisierungskatalysator zur Herstellung von farbreduzierten isocyanuratgruppenhaltigen Polyisocyanaten der allgemeinen Formel (**I**) 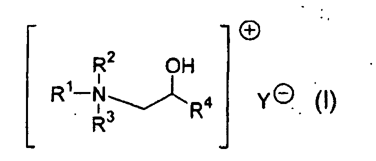 mit 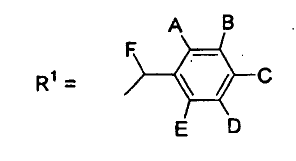 und wobei die Variablen folgende Bedeutung haben:
A,B,C,D,E: unabhängig voneinander oder gleichzeitig Wasserstoff, Chlor, C1-C4-Alkyl, C1-C4-Alkoxy, C1-C4-Alkoxycarbonyl, Hydroxy, (R⁵)₃SiO-, (R⁵)₂N-, -COOH, (R⁵)₂N-CH₂- oder Phenyl, wobei zwei beliebige benachbarte Reste aus der Gruppe A,B,C,D,E einen gemeinsamen 5- oder 6-gliedrigen, gesättigten oder ungesättigten Ring bilden können, der auch N,S oder O als Heteroatom enthalten kann;
F: Wasserstoff oder Methyl;
R²: C1-C4-Alkyl, C2-C6-Hydroxyalkyl (mit der Hydroxygruppe in 2-Position zum quarternären Stickstoff) oder R¹;
R³: C2-C4-Alkyl, oder R¹;
R⁴: Wasserstoff, Methyl, C2-C10-Alkyl, C3-C8-Cycloalkyl oder C2-C12-Alkoxy;
R⁵: C1-C4-Alkyl;
Y⁻: R⁶COO⁻ oder OH⁻;
R⁶: Wasserstoff oder verzweigter oder unverzweigter aliphatischer oder araliphatischer C1-C10-Alkylrest.

7. Verfahren nach mindestens einem der Ansprüche 1 bis 5,
**dadurch gekennzeichnet,**
**dass** die Trimerisierung batchweise oder kontinuierlich durchgeführt wird.

8. Verfahren nach Anspruch 7,
**dadurch gekennzeichnet,**
**dass** das Verfahren batchweise in einem Rührreaktor durchgeführt wird.

9. Verfahren nach Anspruch 7,
**dadurch gekennzeichnet,**
**dass** das Verfahren kontinuierlich in einer Reaktionsschlange durchgeführt wird.

10. Verfahren nach Anspruch 9,
**dadurch gekennzeichnet,**
**dass** die kontinuierliche Trimerisierung in einer Reaktionsschiange unter kontinuierlicher, gleichzeitiger Zudosierung des Diisocyanats und des Trimerisierungskatalysators bei 40 bis 120 °C und innerhalb von 1 bis 7 Minuten durchgeführt wird.

11. Verfahren nach mindestens einem der Ansprüche 9 bis 10,
**dadurch gekennzeichnet,**
**dass** das Diisocyanat/Katalysatorgemisch vor Eintritt in die Reaktionsschlange auf 50 bis 60 °C erhitzt wird.

12. Verfahren nach mindestens einem der Ansprüche 9 bis 11,
**dadurch gekennzeichnet,**
**dass** die Einsatzprodukte vor Eintritt in die Reaktionsschlange intensiv gemischt werden.

13. Verfahren nach mindestens einem der Ansprüche 9 bis 12,
**dadurch gekennzeichnet,**
**dass** die Temperatur der Reaktionsschlangenabschnitte so gewählt werden, dass die Vorwärmzone 40 bis 60 °C, die Reaktionszone 70 bis 120 °C, vorzugsweise 70 bis 100 °C, und die Abkühlzone 20 bis 40 °C hat.

## Claims

1. A process for preparing a reduced-colour polyisocyanate containing an isocyanurate group by partially trimerizing an aliphatic, cycloaliphatic and/or (cyclo)aliphatic diisocyanate and subsequently separating off excess diisocyanate, **characterized in that** the trimerization is performed in the presence of 0.04 - 2% by weight, based on the weight of the diisocyanate used, of at least one trimerization catalyst of the general formula (I) 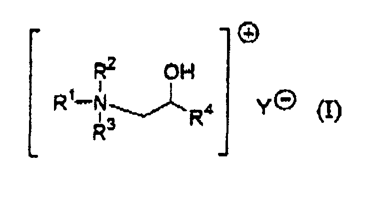 where 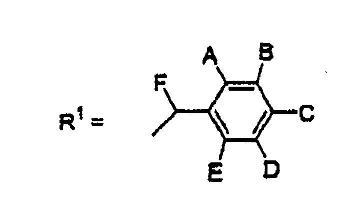 and the variables are defined as follows:
A, B, C, D and E independently of one another or simultaneously are hydrogen, chlorine, C1-C4 alkyl, C1-C4 alkoxy, C1-C4 alkoxycarbonyl, hydroxyl, (R⁵)₃SiO-, (R⁵)₂N-, -COOH, (R⁵)₂N-CH₂- or phenyl, it being possible for any two adjacent radicals from the group A, B, C, D and E to form a conjoint 5- or 6-membered saturated or unsaturated ring which may also include N, S or O as heteroatom;
F is hydrogen or methyl;
R² and R³ independently of one another or simultaneously are C1-C4 alkyl, C2-C6 hydroxyalkyl (with the hydroxyl group in position 2 relative to the quaternary nitrogen) or R¹;
R⁴ is hydrogen, methyl, C2-C10 alkyl, C3-C8 cycloalkyl or
C2-C12 alkoxy;
R⁵ is C1-C4 alkyl;
Y⁻ is R⁶COO⁻ or OH⁻; and
R⁶ is hydrogen or a branched or unbranched aliphatic or araliphatic C1-C10 alkyl radical.

2. A process according to claim 1, **characterized in that** said trimerization is carried out at temperatures of from 35°C to 185°C.

3. A process according to claim 1 or 2, **characterized in that** 1-isocyanato-3,3,5-trimethyl-5-isocyanatomethylcyclohexane (IPDI), 1,6-hexa-methylene diisocyanate (HDI), 2-methyl-1,5-diiso-cyanate (MPDI), 2,5-(2,6-)-bis(isocyanatomethyl)-bicyclo[2.2.1]heptane (NBDI), or 2,2,4- or 2,4,4-trimethyl-1,6-hexamethylene diisocyanate (TMDI), alone or in mixtures, is used as diisocyanate.

4. A process according to any of claims 1 to 3, **characterized in that** 0.06 - 1.5% by weight of catalyst is used.

5. A process according to any of claims 1 to 4, **characterized in that** the diisocyanate used has been prepared by the phosgene process and/or by a phosgene-free process.

6. A trimerization catalyst for preparing reduced-colour polyisocyanates containing isocyanurate groups, of the general formula (I) 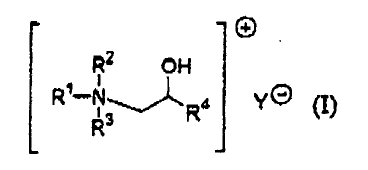 where 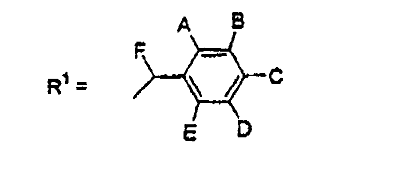 and the variables are defined as follows:
A, B, C, D and E independently of one another or simultaneously are hydrogen, chlorine, C1-C4 alkyl, C1-C4 alkoxy, C1-C4 alkoxycarbonyl, hydroxyl, (R⁵)₃SiO-, (R⁵)₂N-, -COOH, (R⁵)₂N-CH₂- or phenyl, it being possible for any two adjacent radicals from the group A, B, C, D and
E to form a conjoint 5-or 6-membered saturated or unsaturated ring which may also include N, S or 0 as heteroatom;
F is hydrogen or methyl;
R² is C1-C4 alkyl, C2-C6 hydroxyalkyl (with the hydroxyl group in position 2 relative to the quaternary nitrogen) or R¹;
R³ is C2-C4 alkyl, or R¹;
R⁴ is hydrogen, methyl, C2-C10 alkyl, C3-C8 cycloalkyl or C2-C12 alkoxy;
R⁵ is C1-C4 alkyl;
Y⁻ is R⁶COO⁻ or OH⁻; and
R⁶ is hydrogen or a branched or unbranched aliphatic or araliphatic C1-C10 alkyl radical.

7. A process according to at least one of claims 1 to 5, **characterized in that** the trimerization is carried out batchwise or continuously.

8. A process according to claim 7, **characterized in that** the process is carried out batchwise in a stirred reactor.

9. A process according to claim 7, **characterized in that** the process is carried out continuously in a reaction coil.

10. A process according to claim 9, **characterized in that** the continuous trimerization is carried out in a reaction coil with continuous, simultaneous metered addition of the diisocyanate and of the trimerization catalyst at from 40 to 120°C over a period of from 1 to 7 minutes.

11. A process according to at least one of claims 9 and 10, **characterized in that** the diisocyanate/catalyst mixture is heated to from 50 to 60°C before entry into the reaction coil.

12. A process according to at least one of claims 9 to 11, **characterized in that** the starting materials are mixed thoroughly before entry into the reaction coil.

13. A process according to at least one of claims 9 to 12, **characterized in that** the temperature of the sections of the reaction coil is selected such that the preheat zone is at from 40 to 60°C, the reaction zone is at from 70 to 120°C, preferably from 70 to 100°C, and the cooling zone is at from 20 to 40°C.

## Revendications

1. Procédé pour la préparation de polyisocyanates contenant des groupes isocyanurates de couleur réduite, par trimérisation partielle de diisocyanates aliphatiques, cycloaliphatiques et/ou (cyclo)aliphatiques, suivie d'une séparation du diisocyanate en excès,
**caractérisé en ce que**
la trimérisation a lieu en présence de 0,04 - 2 % en poids, sur la base du poids du diisocyanate utilisé, d'au moins un catalyseur de trimérisation répondant à la formule générale (I) : 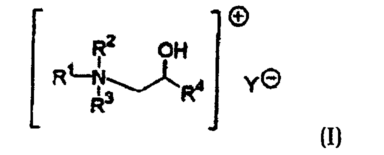 avec 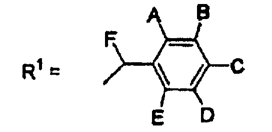 et dans laquelle les variables ont la signification suivante :
A, B, C, D, E : indépendamment les unes des autres ou en même temps, hydrogène, chlore, alkyle en C₁ - C₄, alcoxy en C₁ - C₄, alcoxy en C₁ - C₄ carbonyle, hydroxy, (R⁵)₃SiO-, (R⁵)₂N-, -COOH, (R⁵)₂N-CH₂ - ou phényle, deux restes voisins quelconques du groupe A, B, C, D, E pouvant former ensemble un noyau saturé ou insaturé à 5 ou 6 membres, qui peut aussi contenir N, S ou O comme hétéroatome,
F : hydrogène ou méthyle ;
R², R³ : indépendamment l'un de l'autre ou en même temps alkyle en C₁ - C₄, hydroxyalkyle en C₂ - C₆ (avec le groupe hydroxy en position 2 par rapport à l'azote quaternaire) ou R¹ ;
R⁴ : hydrogène, méthyle, alkyle en C₂ - C₁₀, cycloalkyle en C₃ - C₈, ou alcoxy en C₂ - C₁₂ ;
R5 : alkyle en C₁ - C₄ ;
Y⁻ : R⁶COO⁻ ou OH⁻ ;
R⁶ : hydrogène ou reste alkyle en C₁ - C₁₀, aliphatique ou araliphatique, ramifié ou non ramifié.

2. Procédé selon la revendication 1,
**caractérisé en ce que**
la trimérisation est effectuée à des températures se situant entre 35 °C et 185 °C.

3. Procédé selon la revendication 1 ou 2,
**caractérisé en ce que**
on utilise comme diisocyanates le 1 - isocyanato-3,3,5-triméthyl-5-isocyanatométhylcyclohexane (IPDI), le 1,6-hexaméthylènediisocyanate (HDI), le 2-méthyl-1,5-diisocyanate (MPDI), le 2,5 (2,6)-bis(isocyanatométhyl) bicyclo (2.2.1) heptane (NBDI), ainsi que le 2,2,4-ou 2,4,4-triméthyl-1,6-hexaméthylènediisocyanate (TMDI), seuls ou en mélanges.

4. Procédé selon les revendications 1 à 3,
**caractérisé en ce que**
on utilise 0,06 - 1,5 % en poids de catalyseur.

5. Procédé selon les revendications 1 à 4,
**caractérisé en ce que**
on utilise des diisocyanates qui ont été préparés par le procédé au phosgène et/ou par un procédé sans phosgène.

6. Catalyseur de trimérisation pour la préparation de polyisocyanates contenant des groupes isocyanurates de couleur réduite, répondant à la formule générale (I) : 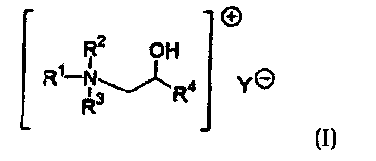 avec 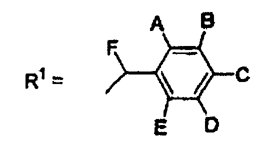 et dans laquelle les variables ont la signification suivante :
A, B, C, D, E : indépendamment les unes des autres ou en même temps, hydrogène, chlore, alkyle en C₁ - C₄, alcoxy en C₁ - C₄, alcoxy en C₁ - C₄ carbonyl, hydroxy, (R⁵)₃SiO-, (R⁵)₂N-, -COOH, (R⁵)₂N-CH₂ - ou phényle, deux restes voisins quelconques du groupe A, B, C, D, E pouvant former ensemble un noyau saturé ou insaturé à 5 ou 6 membres, qui peut aussi contenir N, S ou O comme hétéroatome,
F : hydrogène ou méthyle ;
R² : alkyle en C₁ - C₄, hydroxyalkyle en C₂ - C₆ (avec le groupe hydroxy en position 2 par rapport à l'azote quaternaire) ou R¹ ;
R³ : alkyle en C₁ - C₄ ou R¹ ;
R⁴ : hydrogène, méthyle, alkyle en C₂ - C₁₀, cycloalkyle en C₃ - C₈, ou alcoxy en C₂ - C₁₂ ;
R⁵ : alkyle en C₁ - C₄ ;
Y⁻ : R⁶COO⁻ ou OH⁻ ;
R⁶ : hydrogène ou reste alkyle en C₁ - C₁₀, aliphatique ou araliphatique, ramifié ou non ramifié.

7. Procédé selon au moins des revendications 1 à 5,
**caractérisé en ce que**
la trimérisation est effectuée en discontinu ou en continu.

8. Procédé selon la revendication 7,
**caractérisé en ce que**
le procédé est mis en oeuvre en discontinu dans un réacteur agité.

9. Procédé selon la revendication 7,
**caractérisé en ce que**
le procédé est mis en oeuvre en continu dans un serpentin à réaction.

10. Procédé selon la revendication 9,
**caractérisé en ce que**
la trimérisation continue est effectuée dans une colonne de réaction avec addition dosée simultanée, continue, de diisocyanate et du catalyseur de trimérisation à 40 à 120 °C et en l'espace de 1 à 7 minute(s).

11. Procédé selon au moins une des revendications 9 à 10,
**caractérisé en ce que**
le mélange diisocyanate/catalyseur est chauffé avant son entrée dans la colonne de réaction à 50 à 60 °C.

12. Procédé selon au moins une des revendications 9 à 11,
**caractérisé en ce que**
les produits utilisés sont intensément mélangés avant leur entrée dans la colonne de réaction.

13. Procédé selon au moins une des revendications 9 à 12,
**caractérisé en ce que**
la température des segments de colonne de réaction est choisie de sorte que la zone de pré-chauffage se trouve à 40 à 60 °C, la zone de réaction à 70 à 120 °C, de préférence 70 à 100 °C, et la zone de refroidissement à 20 à 40 °C.
